# EUROPÄISCHE PATENTSCHRIFT

(11) **EP 2 220 438 B1**
(45) Veröffentlichungstag und Bekanntmachung des Hinweises auf die Patenterteilung: **24.07.2019**
(21) Anmeldenummer: 08855102.3
(22) Anmeldetag: 07.11.2008
(51) Int. Cl.: F02C 3/28, F02C 6/18, F02C 3/14, F02C 6/00, F02C 9/40, F23R 3/36, F23D 11/40

(54) **VERFAHREN ZUM BETRIEB EINER KOMBIKRAFTWERKSEINHEIT MIT EINER GASTURBINENANLAGE UNTER VERWENDUNG EINES ZWEITEN, WASSERSTOFFREICHEN BRENNSTOFFS**
METHOD FOR OPERATING A COMBINED CYCLE POWER PLANT HAVING A GAS TURBINE INSTALLATION USING A SECOND, HYDROGEN-RICH FUEL
PROCÉDÉ D'UTILISATION D'UNE CENTRALE ÉLECTRIQUE À CYCLE COMBINÉ AVEC UNE INSTALLATION DE TURBINE À GAZ PAR RECOURS À UN DEUXIÈME CARBURANT RICHE EN HYDROGÈNE

(30) Priorität: 27.11.2007 CH 18392007
(43) Veröffentlichungstag der Anmeldung: 25.08.2010
(73) Patentinhaber: Ansaldo Energia Switzerland AG, 5401 Baden (CH)
(72) Erfinder: BRAUTSCH, Andreas, 5303 Würenlingen (CH); CARRONI, Richard, 5443 Niederrohrdorf (CH)
(74) Vertreter: Bernotti, Andrea
(86) Internationale Anmeldenummer: PCT/EP2008/065158
(87) Internationale Veröffentlichungsnummer: WO 2009/068427

(56) Entgegenhaltungen:
- EP-A- 0 610 722
- EP-A- 0 651 042
- EP-A- 0 849 451
- EP-A- 1 277 920
- EP-A- 1 568 942
- WO-A-2006/058843
- WO-A-2007/113074
- WO-A2-2004/089499
- DE-A1-102006 053 679
- US-A- 4 936 869
- US-A1- 2007 072 949
- HAUPT G: "EFFIZIENTE UND UMWELTFREUNDLICHE STROMERZEUGUNG IM GUD-KRAFTWERK MIT INTEGRIERTER VERGASUNG" ELEKTROTECHNIK UND INFORMATIONSTECHNIK, SPRINGER VERLAG, WIEN, AT, Bd. 113, Nr. 2, 1. Februar 1996 (1996-02-01), Seiten 102-108, XP000555695 ISSN: 0932-383X

## Beschreibung

### Technisches Gebiet

Die vorliegende Erfindung bezieht sich auf das Gebiet der Energieerzeugung. Sie betrifft ein Verfahren zum Betrieb einer Kombikraftwerkseinheit mit einer Gasturbinenanlage gemäss den Merkmalen des Anspruchs 1.

### Stand der Technik

Bei der Verbrennung von fossilen Brennstoffen in Energieerzeugungsanlagen bekommt im Zuge der Klimadiskussion die Frage des CO2-Ausstosses eine zunehmende Bedeutung.

Es sind seit langem so genannte "Polygeneration"-Systeme bzw. -Anlagen bekannt (siehe z. B. die US-A-4,936,869), bei denen aus einem Kohlenstoff-haltigen Einsatzprodukt wie z. B. Kohle durch Vergasung und Reformierung ein Syngas, gasförmiger Stickstoff und flüssiger Wasserstoff erzeugt werden. Das Syngas wird zur Verbrennung der Brennkammer einer Gasturbinenanlage zugeführt, die Teil eines Kombikraftwerks ist, und mit den heissen Abgasen aus der Gasturbine in einem Wasser/Dampf-Kreislauf Dampf für den Betrieb einer Dampfturbine erzeugt wird. Die beiden Turbinen erzeugen elektrische Energie, während ein Teil des erzeugten Dampfes zur Reformierung eingesetzt wird. Zusätzlich kann dem Kombikraftwerk thermische Energie für Prozess- oder Heizzwecke entnommen werden. Die erzeugte elektrische Energie kann in der Anlage selbst eingesetzt aber auch an externe Verbraucher abgegeben werden. Der erzeugte Wasserstoff, der von hoher Reinheit (99,9 %) sein kann, kann beispielsweise für chemische Prozesse wie die Herstellung von Kunstdünger verwendet werden.

Wenn bei einer solchen Anlage der Brennstoff für die Gasturbine einen hohen Anteil an Wasserstoff enthielte, wäre - wenn das bei der Vergasung entstehende CO2 abgeschieden würde - der Ausstoss an CO2 mit den Abgasen der Gasturbine gering (entspräche einer ca. 90%igen Rückhaltung von CO2). Derartige "CO2-freie" Kraftwerksanlagen wären jedoch nur dann einsatzbereit, wenn Brennstoffe mit einem hohen Wasserstoffanteil sicher und ohne wesentliche Verdünnung in einer Gasturbine (mit oder ohne sequentielle Verbrennung) verbrannt werden könnten. Um eine ca. 90%ige Rückhaltung von CO2 zu erreichen, wäre jedoch eine erfolgreiche Entwicklung von neuen Brennertechnologien notwendig, die derzeit nicht zur Verfügung stehen.

Es sind weiterhin seit längerem Gasturbinenanlagen mit sequentieller Verbrennung bekannt (siehe z. B. D.K. Mukherjee, "State-of-the-art gas turbines - a brief update", ABB Review 2/1997, S.4-14 oder F. Joos et al., "Field experience with the sequential combustion system of the GT24/GT26 gas turbine family", ABB Review 5/1998, S.12-20). Für derartige Gasturbinenanlagen sind bereits Vorschläge zur Reduktion des CO2-Ausstosses gemacht worden, die auf einer Abgasrückführung beruhen (siehe z. B. die US-A1-2006/0272331). Derartige Gasturbinenanlagen mit sequentieller Verbrennung sind aber auch bereits als Teil eines Kombikraftwerks mit integrierter Kohlevergasung eingesetzt worden (siehe z. B. die WO-A1-2007/017486), wobei das bei der Vergasung erzeugte Syngas als Brennstoff sowohl in der ersten als auch in der zweiten Brennkammer verwendet wird.

Bei den bekannten Gasturbinenanlagen mit sequentieller Verbrennung (siehe EP-0 620 362 A1) kommen in der ersten Brennkammer so genannte EV-Brenner (siehe EP-0 321 809 A1 und die seither erfolgten Entwicklungen) zum Einsatz. In der zweiten Brennkammer werden entsprechend so genannte SEV-Brenner eingebaut (siehe die o.g. Druckschriften). In der Vergangenheit sind für die erste Brennkammer besonders leistungsfähige Brennertypen (so genannte AEV-Brenner oder Advanced EV-Brenner) entwickelt worden (B. Nilsson, "GTX100 - a new high-performance gas turbine" ABB Review 6/1997, S.4-12, Abb. 3; WO-A1-2006/069861, resp. EP-0 704 657 A2 und weitere hiervon abgeleitete Entwicklungen), die als Vormischbrenner ausgebildet sind, bei denen sowohl in einer Vormischeinrichtung als auch in einem nachfolgenden Mischrohr gasförmige Brennstoffe eingedüst werden.

Schliesslich ist aus der EP-A2-1 741 899 eine Gasturbinenanlage mit CO2-Abtrennung bekannt, die zwei separate Gasturbinensysteme umfasst, die jeweils einen Verdichter, eine Brennkammer und eine Turbine aufweisen. Ein Teil der im ersten Verdichter verdichteten Luft wird dabei der zweiten Brennkammer als Verbrennungsluft zugeführt, während die Abgase der zweiten Turbine auf den zweiten Verdichter zurückgeführt und dort mit verdichtet werden. Aus den verdichteten Gasen wird dann CO2 abgetrennt. Beide Gasturbinensysteme sind jeweils über einen Abhitzedampferzeuger mit einem Wasser/Dampf-Kreislauf zu einem Kombikraftwerk verknüpft. In der ersten Brennkammer wird reiner Wasserstoff verbrannt, in der zweiten Brennkammer kann als Brennstoff beispielsweise Erdgas eingesetzt werden. Der Wasserstoff kann von aussen zugeführt oder durch interne Reformierung erzeugt werden. Durch den Betrieb der einen (ersten) Brennkammer mit reinem Wasserstoff wird - wenn das bei der Wasserstofferzeugung anfallende CO2 abgeschieden wird - bereits der CO2-Ausstoss erheblich reduziert. Nachteilig ist dabei jedoch, dass das erste Gasturbinensystem auf den Betrieb mit reinem Wasserstoff ausgelegt sein muss, was bei bereits bestehenden bzw. fertig entwickelten Anlagen nicht der Fall ist.

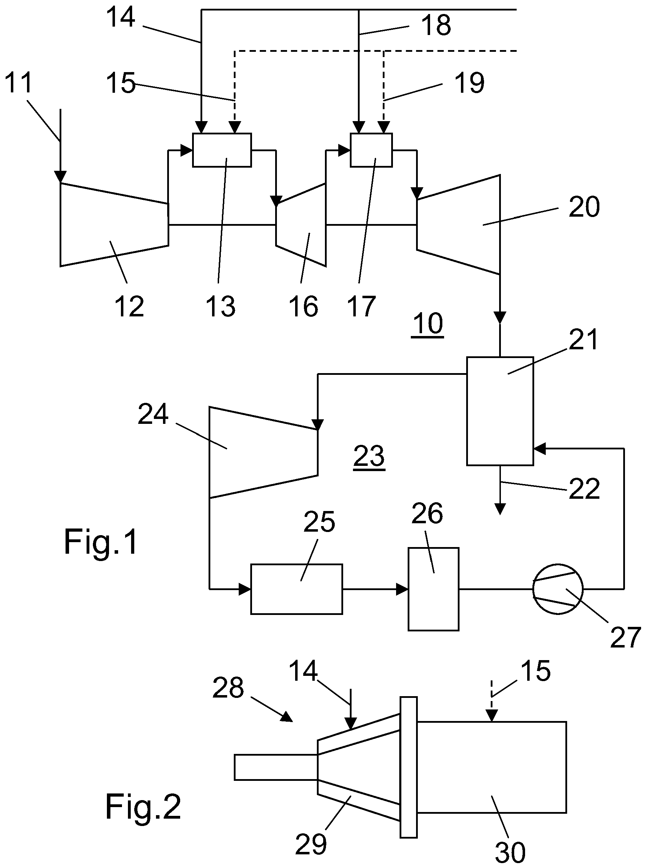

In WO 2006/058843 wird ein Verfahren und eine Vorrichtung zum Betrieb einer Gasturbinenanlage und zur Verbrennung von mehreren Brennstoffen in einem Vormischbrenner (Fig. 1-10) offenbart. Als Brennstoffe werden dort Erdöl (B_{L}), Erdgas (B_{G}) und Wasserstoff oder Wasser enthaltender Brennstoff (B_{M}) eingesetzt. Diese Brennstoffe können, so die fachbezogene Auslegung, einzeln als auch kombiniert zugeführt und verbrannt sowie an verschiedenen Stellen des Vormischbrenners vermischt werden

Aus EP 1 568 942 A1 geht hervor, dass zur Sicherstellung eines schadstoffarmen Betriebs die Mischung von Brennstoff und Verbrennungsluft von besonderer Bedeutung ist. Temperaturspitzen können nur durch eine möglichst homogene Mischung vermieden werden. Da bei niederkalorischen Brenngasen hohe Volumenströme an Brenngas involviert sind, die mit Verbrennungsluft zu mischen sind, stellte hier die Lösung der Mischaufgabe die Fachwelt vor besondere Herausforderungen an die konstruktive Auslegung derartiger Brenner. Mit dem Synthesegas-Vormischbrenner der Erfindung wird erstmals ein Brennerkonzept vorgeschlagen, welches die Schadstoffausstoss bezogenen Vorteile des Vormischbetriebs auch für niederkalorische Synthesegase als Brennstoff anwendbar macht. Durch die Eindüsevorrichtung stromab der Dralleinrichtung erfolgt die Eindüsung von unverdünnten bzw. teilverdünnten niederkalorischen Brenngas in den bereits verdrallten Massenstrom. Im räumlichen Bereich stromab der Drallvorrichtung erfolgt dadurch eine weitgehend homogene Vermischung des Synthesegases und dem verdrallten Luftmassenstromes. Die Verbrennung des vorgemischten Brenngas-Luftgemisches erfolgt stromab des Brenners bei einer der vorgemischten Luftzahl entsprechenden Temperatur.

Als weitere Druckschriften sind zu nennen: DE 10 2006 053679 A1; EP 1 277 920 A1; EP 0 610 722 A1; EP 0 849 451 A2; G. Haupt, "Effiziente und umweltfreundliche Stromerzeugung im GUD-Kraftwerk mit integrierter Vergasung", Elektrotechnik und Informationstechnik, Springer Verlag, Wien, Band 113 (1996), No. 2, Seiten 102-108; WO 2007/113074 A1; US 4,936,869; EP 0 651 042 A1.

### Darstellung der Erfindung

Es ist Aufgabe der Erfindung, ein Verfahren zum Betrieb einer Kombikraftwerkseinheit mit einer Gasturbinenanlage anzugeben, das ohne Neukonstruktion einerseits einen hohen Wirkungsgrad gewährleistet und andererseits eine partielle Rückhaltung von CO2 in der Grössenordnung von etwa 30-70% ermöglicht.

Die Aufgabe wird durch die Gesamtheit der Merkmale des Anspruchs 1 gelöst.

Wesentlich für die Erfindung ist, dass als Brennstoff sowohl ein erster Brennstoff auf Kohlenstoffbasis, in Form von Erdgas, sowie ein zweiter Brennstoff in Form eines Wasserstoff-reichen Brennstoffs oder reinen Wasserstoffs eingesetzt wird, wobei der erste und der zweite Brennstoff miteinander vermischt und in der wenigstens einen Brennkammer gemeinsam verbrannt werden. Durch die "Verdünnung" des Wasserstoffs bzw. des Wasserstoff-reichen Brennstoffs mit Erdgas wird ein sicherer Betrieb der Gasturbinenanlage ohne wesentliche Einbussen im Wirkungsgrad ermöglicht, wie sie sonst bei der Verdünnung mit N2 oder Dampf auftreten würden, ohne dass massgebliche Änderungen an der Anlage bzw. den Brennern vorgenommen werden müssten. Das Mass der Rückhaltung des CO2 wird dabei vom Verhältnis des Wasserstoffs bzw. Wasserstoff-reichen Brennstoffs zum Verdünnungsmedium (Erdgas) bestimmt. Eine Ausgestaltung der Erfindung ist dadurch gekennzeichnet, dass die Gasturbinenanlage als Anlage mit sequentieller Verbrennung in wenigstens zwei aufeinander folgenden Brennkammern ausgebildet ist, denen jeweils eine Turbine nachgeschaltet ist, und dass in jeder der Brennkammern eine Mischung aus dem ersten und zweiten Brennstoff verbrannt wird.

Dadurch, dass gemäß der Erfindung die Brennkammer bzw. Brennkammern mit Vormischbrennern ausgestattet ist (sind), ist es von Vorteil, wenn in Strömungsrichtung zunächst der erste Brennstoff und weiter stromabwärts der zweite Brennstoff eingedüst werden.

Da die Vormischbrenner eine Vormischeinrichtung und ein nachfolgendes Mischrohr aufweisen, werden der erste Brennstoff in der Vormischeinrichtung und der zweite Brennstoff im Mischrohr eingedüst.

Eine andere Ausgestaltung des Verfahrens nach der Erfindung zeichnet sich dadurch aus, dass die heissen Abgase der Gasturbinenanlage zur Erzeugung von Dampf verwendet werden, und dass der erzeugte Dampf zur Erzeugung des zweiten Brennstoffs verwendet wird.

Bei der Gasturbinenanlage mit sequentieller Verbrennung in wenigstens zwei aufeinander folgenden Brennkammern kann an jeder der Brennkammern eine separate Brennstoffzufuhr für den ersten und zweiten Brennstoff vorgesehen sein, wobei an den Vormischbrennern die Brennstoffzufuhr für den ersten Brennstoff jeweils stromaufwärts der Brennstoffzufuhr für den zweiten Brennstoff angeordnet ist.

Vorzugsweise weisen die Vormischbrenner jeweils eine Vormischeinrichtung und ein nachfolgendes Mischrohr auf, und die Brennstoffzufuhr für den ersten Brennstoff mündet in die Vormischeinrichtung und die Brennstoffzufuhr für den zweiten Brennstoff mündet in das Mischrohr ein.

Die Erfindung zeichnet sich dadurch aus, dass die Kombikraftwerkseinheit einen separaten Wasser/Dampf-Kreislauf mit einem Abhitzedampferzeuger, einer Dampfturbine, einem Kondensator einem Speisewasserbehälter und einer Speisewasserpumpe umfasst, und dass der Abhitzedampferzeuger von den Abgasen der Gasturbinenanlage durchströmt wird.

Dabei sind zusätzliche erste Mittel zur Erzeugung von Syngas aus einem Kohlenstoff-haltigen Einsatzprodukt vorgesehen, welche Mittel mit dem Wasser/Dampf-Kreislauf und der Brennstoffzufuhr für den zweiten Brennstoff in Verbindung stehen.

Die ersten Mittel zur Erzeugung von Syngas umfassen eine Luftzerlegungseinheit, eine Vergasungseinheit, eine Kühl- und Hydrolyseeinheit, eine MDEA-Wascheinheit und eine Metallcarbonylentfernungseinheit, welche in Strömungsrichtung hintereinander geschaltet sind. Zusätzlich sind zweite Mittel zur Erzeugung von reinem Wasserstoff vorgesehen, welche den ersten Mitteln nachgeschaltet sind, und welche eine Membran-Abtrenneinheit und eine PSA-Reinigungseinheit umfassen.

### Kurze Erläuterung der Figuren

Die Erfindung soll nachfolgend anhand von Ausführungsbeispielen im Zusammenhang mit der Zeichnung näher erläutert werden. Es zeigen
- Fig. 1: ein stark vereinfachtes Anlagenschema eines Kombikraftwerks mit sequentieller Verbrennung in der Gasturbinenanlage und mit einer Mischung zweier Brennstoffe gemäss einem Ausführungsbeispiel der Erfindung;
- Fig. 2: eine vereinfachte Darstellung eines AEV-Brenners, wie er in der EP-0 704 657 A2 resp. WO-A1-2006/09861 beispielhaft beschrieben und in der Anlage nach Fig. 1 mit Vorteil eingesetzt ist; und
- Fig. 3: ein stark vereinfachtes Anlagenschema einer Polygeneration-Anlage, wie sie zur Verwirklichung der Erfindung geeignet ist.

### Wege zur Ausführung der Erfindung

In Fig. 1 ist ein stark vereinfachtes Anlagenschema eines Kombikraftwerks mit sequentieller Verbrennung in der Gasturbinenanlage und mit einer Mischung zweier Brennstoffe gemäss einem Ausführungsbeispiel der Erfindung wiedergegeben. Die Kombikraftwerkseinheit 10 umfasst eine Gasturbinenanlage 11,..,20 sowie einen damit verkoppelten Wasser/Dampf-Kreislauf 23. Die Gasturbinenanlage ist mit einer sequentiellen Verbrennung ausgerüstet. Sie umfasst einen Verdichter 12, eine nachfolgende erste Brennkammer, eine erste Turbine 16, eine nachfolgende zweite Brennkammer 17 und eine zweite Turbine 20. Luft wird vom Verdichter 12 über einen Lufteinlass 11 angesaugt und verdichtet. Die verdichtete Luft wird als Verbrennungsluft in die erste Brennkammer 13 eingeleitet und dort zu einem Teil zur Verbrennung einer Brennstoffmischung verwendet, die durch zwei getrennte Brennstoffzufuhren 14 und 15 bereitgestellt wird. Die erste Brennstoffzufuhr 14 umfasst einen Brennstoff auf Kohlenstoffbasis, insbesondere Erdgas. Die zweite Brennstoffzufuhr 15 (in Fig. 1 gestrichelt eingezeichnet) bezieht sich auf einen Wasserstoff-reichen Brennstoff oder reinen Wasserstoff.

Die bei der Verbrennung in der ersten Brennkammer 13 entstehenden heissen Gase werden in der ersten Turbine 16 unter Arbeitsleistung entspannt und anschliessend in die zweite Brennkammer 17 eingeleitet, wo der restliche Teil der Luft zur Verbrennung eines Brennstoffs verwendet wird, der in diesem Beispiel ebenfalls aus einer Brennstoffmischung besteht, die durch zwei getrennte Brennstoffzufuhren 18 und 19 bereitgestellt wird und ebenfalls einen Brennstoff auf Kohlenstoffbasis, insbesondere Erdgas, und einen Wasserstoff-reichen Brennstoff oder reinen Wasserstoff umfasst.

Die heissen Abgase der zweiten Brennkammer 17 werden in der zweiten Turbine 20 unter Arbeitsleistung entspannt und gelangen dann zu einem nachgeschalteten Abhitzedampferzeuger 21, der Teil des Wasser/Dampf-Kreislaufs 23 ist. Im Abhitzedampferzeuger 21 wird von einer Speisewasserpumpe 27 gefördertes aus einem Speisewasserbehälter 26 stammendes Speisewasser in Heissdampf umgewandelt, der eine ein- oder mehrstufige Dampfturbine 24 antreibt, dann in einem Kondensator 25 kondensiert wird und als Kondensat in den Speisewasserbehälter 26 zurückfliesst.

In der ersten Brennkammer 13 werden vorzugsweise Vormischbrenner in Form von so genannten EV-Brennern (siehe z. B. die EP-0 321 809) und/oder AEV-Brennern (siehe z. B. die EP-0 704 657) eingesetzt, wie sie in den eingangs genannten Druckschriften beschrieben sind. In der zweiten Brennkammer 17 finden entsprechend so genannte SEV-Brenner (siehe z. B. die EP-0 620 362) Verwendung. Ein Vormischbrenner vom AEV-Typ, wie er in der WO-A1-2006/09861 beispielhaft beschrieben ist, ist in Fig. 2 stark vereinfacht wiedergegeben. Der Vormischbrenner 28 der Fig. 2 umfasst in Strömungsrichtung hintereinander angeordnet eine Vormischeinrichtung 29 in Form eines Doppelkegels und ein daran anschliessendes Mischrohr 30. In der Vormischeinrichtung 29 strömt von aussen zwischen den kegelförmigen Schalen Luft ein, in die über mehrere Düsenöffnungen senkrecht zum Kegelmantel der erste Brennstoff (Erdgas) eingedüst wird. Der Wirbel der Brennstoff/Luft-Mischung tritt dann in das im Wesentlichen zylindrische Mischrohr 30 ein, wo über Kanäle in der Rohrwand der zweite Brennstoff (reines H2 oder H2-reicher Brennstoff) eingedüst wird und sich mit der Brennstoff/Luft-Mischung aus der Vormischeinrichtung 29 vermischt. Das entstehende Gasgemisch tritt dann aus dem Mischrohr 30 aus und verbrennt im anschliessenden Brennraum. Eine vergleichbare Mischung kann auch in den SEV-Brennern der zweiten Brennkammer 17 realisiert werden.

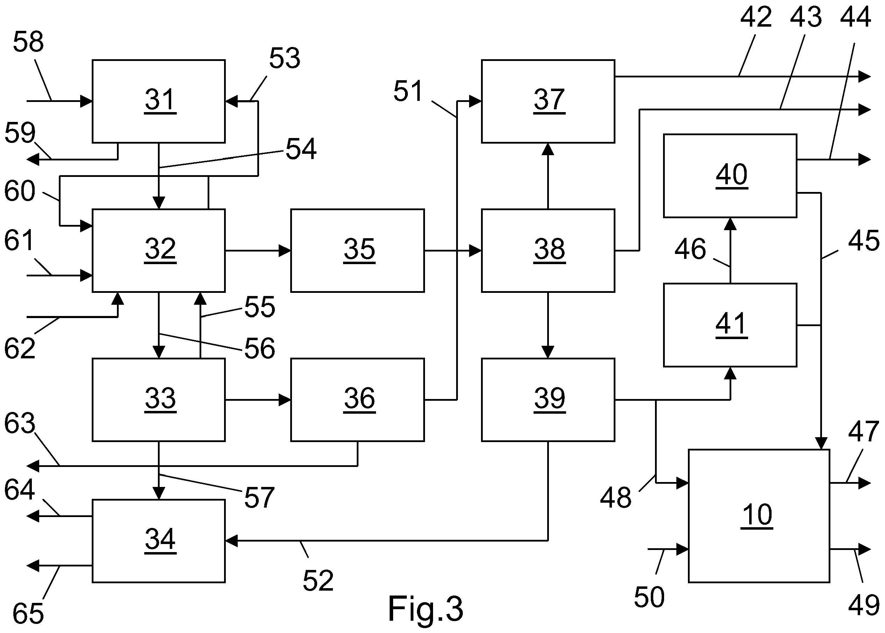

Grundsätzlich kann der für die Verbrennung verwendete Wasserstoff von ausserhalb der Anlage zugeführt werden. Besonders günstig ist es jedoch, wenn die Kombikraftwerkseinheit 10 der Fig. 1 Teil einer Gesamtanlage mit Polygeneration ist, wie sie in Fig. 3 beispielhaft dargestellt ist. In der Gesamtanlage gemäss Fig. 3 wird aus einem zugeführten Einsatzprodukt 62 (z. B. Teer aus einer Visbreaker-Anlage) in einer Vergasungseinheit 32 ein Gas gewonnen, das nach Kühlung und COS-Hydrolyse in einer Kühl- und Hydrolyseeinheit 35, Abtrennen von Säuregasen (CO2) in einer MDEA-Wascheinheit und Abtrennen von Metallcarbonyl in einer Metallcarbonylentfernungseinheit 39 als Wasserstoff-reiches Syngas 48 der Kombikraftwerkseinheit 10 als zweiter Brennstoff zugeführt wird, während als erster Brennstoff Erdgas 50 eingespeist wird.

Die Kombikraftwerkseinheit 10 gibt einerseits elektrische Energie 47 nach aussen ab und andererseits Dampf 49, der als Dampf 53 einer Luftzerlegungseinheit 31 und als Hochdruckdampf 60 der Vergasungseinheit 32 zugeführt wird. In der Luftzerlegungseinheit (Air Separation Unit ASU) 31 wird Luft 58 in Stickstoff 59 und Sauerstoff 54 zerlegt. Der Sauerstoff 54 wird in der Vergasungseinheit 32 zur Vergasung des Einsatzproduktes 62 verwendet. Zusätzlich wird Speisewasser 61 zugeführt sowie aus einer Wasserfiltriereinheit 33 zurückgeführtes Wasser 55, das aus dem Schmutzwasser 56 der Vergasungseinheit 32 zurückgewonnen worden ist.

Aus der Wasserfiltriereinheit 33 gelangt ein Filterkuchen 57 zu einer Aschefiltereinheit 34, die ihrerseits Metallasche 64 und Abgas 65 abgibt.

Aus der Wasserfiltriereinheit 33 gelangt weiterhin Wasser zu einer Schmutzwasserentfernungseinheit 36, die Sauergase 51 entfernt und an eine Schwefelaufbereitungseinheit 37 abgibt, die ihrerseits am Ausgang Schwefel 42 bereitstellt. Die Schwefelaufbereitungseinheit 37 erhält von der MDEA-Wascheinheit 38 zusätzlich Säuregas. Die MDEA-Wascheinheit 38 gibt Kohlendioxid 43 nach aussen ab, das aufgefangen werden kann. Die Schmutzwasserentfernungseinheit 36 gibt Abwasser 63 nach aussen ab.

Das von der Metallcarbonylentfernungseinheit 39 aus dem Gas entfernte Metallcarbonyl wird als verbrauchter Kohlenstoff 52 an die Aschefiltereinheit 34 abgegeben. Einem Teil des Syngases 48 wird schliesslich in einer Membran-Abtrenneinheit 41 der Wasserstoff entzogen, als Rohwasserstoff 46 einer PSA-Reinigungseinheit 40 zugeführt und dort zu reinen Wasserstoff 44 veredelt. Das bei der Membran-Abtrennung 41 und bei der PSA-Reinigung 40 anfallende Restgas 45 wird in der Kombikraftwerkseinheit 10 verarbeitet.

Im Beispiel der Fig. 3 wird ausschliesslich das erzeugte Syngas als Wassrstoffreicher zweiter Brennstoff verwendet. Es ist aber auch möglich, gemäß der Erfindung, den reinen Wasserstoff 44 in dieser Funktion einzusetzen.

Insgesamt zeichnet sich die Erfindung durch folgende charakteristische Merkmale und Vorteile aus:
- Durch den Einsatz von Erdgas als "Verdünner" ist ein sicherer Betrieb der Gasturbine mit Wasserstoff-reichem Brennstoff möglich, ohne dass es zu wesentlichen Einschränkungen im Betrieb bzw. im Wirkungsgrad kommt, wie sie normalerweise bei "Verdünnungen" wie N2 oder Dampf zu erwarten sind. Hierdurch kann auf gravierende Änderungen bei der Auslegung der Anlagen verzichtet werden.
- Erdgas kann mit Wasserstoff gemischt werden; diese Mischung kann stufenweise eingedüst werden. Das bedeutet, dass weniger N2 oder Dampf zur "Verdünnung" des H2 eingesetzt werden muss. Gleichzeitig lässt sich der gemischte Brennstoff besser eindüsen (reine H2-Strahlen sind sehr schwach und haben eine geringe Eindringtiefe).
- Erdgas und Wasserstoff können in einem Brenner aber auch in Strömungsrichtung hintereinander eingedüst werden, um sich anschliessend zu vermischen.
- In Polygeneration-Anlagen, in denen Spül-Wasserstoff aus der Herstellung von Methanol übrig ist, kann das H2 mit dem Erdgas-Brennstoff der Gasturbine gemischt werden. Dadurch reduziert sich der Ausstoss von CO2 pro erzeugter Energieeinheit, wenn vorausgesetzt wird, dass das bei der H2-Erzeugung entstehende CO2 zurückgehalten wird).
- Die Verbrennung von geringen Mengen H2 in Erdgas ist für die vorhandenen mageren Vormischbrenner vom AEV-Typ unproblematisch.
- Die Erfindung kann nicht nur in Anlagen eingesetzt werden, die im Normalbetrieb mit Erdgas betrieben werden, sondern auch in Anlagen, bei denen Erdgas nur als Brennstoff zum Starten oder Stützen des kontinuierlichen Betriebs verwendet wird.

### Bezugszeichenliste

- 10: Kombikraftwerkseinheit
- 11: Lufteinlass
- 12: Verdichter
- 13,17: Brennkammer
- 14,15,18,19: Brennstoffzufuhr
- 16,20: Turbine
- 21: Abhitzedampferzeuger
- 22: Abgas
- 23: Wasser/Dampf-Kreislauf
- 24: Dampfturbine
- 25: Kondensator
- 26: Speisewasserbehälter
- 27: Speisewasserpumpe
- 28: Vormischbrenner
- 29: Vormischeinrichtung
- 30: Mischrohr
- 31: Luftzerlegungseinheit (Air Separation Unit ASU)
- 32: Vergasungseinheit
- 33: Wasserfiltriereinheit
- 34: Aschefiltereinheit
- 35: Kühl- und Hydrolyseeinheit
- 36: Schmutzwasserentfernungseinheit
- 37: Schwefelaufbereitungseinheit
- 38: MDEA-Wascheinheit
- 39: Metallcarbonylentfernungseinheit
- 40: PSA-Reinigungseinheit
- 41: Membran-Abtrenneinheit
- 42: Schwefel
- 43: Kohlendioxid
- 44: Wasserstoff
- 45: Restgas
- 46: Rohwasserstoff
- 47: elektrische Energie
- 48: Syngas
- 49: Dampf
- 50: Erdgas
- 51: Sauergas
- 52: verbrauchter Kohlenstoff
- 53: Dampf
- 54: Sauerstoff
- 55: zurückgeführtes Wasser
- 56: Schmutzwasser
- 57: Filterkuchen
- 58: Luft
- 59: Stickstoff
- 60: Hochdruckdampf
- 61: Speisewasser
- 62: Einsatzprodukt
- 63: Abwasser
- 64: Metallasche
- 65: Abgas

## Patentansprüche

1. Verfahren zum Betrieb einer Kombikraftwerkseinheit (10) mit einer Gasturbinenanlage, wobei die Gasturbinenanlage wenigstens einen Verdichter (12) zum Verdichten von Verbrennungsluft, wenigstens eine Brennkammer (13, 17) zum Verbrennen eines zugeführten Brennstoffs (14, 15, 18, 19) unter Einsatz der verdichteten Verbrennungsluft sowie wenigstens eine Turbine (16, 20) aufweist, die von den heißen Gasen aus der wenigstens einen Brennkammer (13, 17) durchströmt wird, wobei als Brennstoff sowohl ein erster Brennstoff (14, 18) auf Kohlenstoffbasis, in Form von Erdgas, sowie ein zweiter Brennstoff (15, 19) in Form eines wasserstoffreichen Brennstoffs oder reinen Wasserstoffs eingesetzt wird, wobei der erste und der zweite Brennstoff (14, 18 bzw. 15, 19) miteinander vermischt und in der wenigstens einen Brennkammer (13, 17) gemeinsam verbrannt werden, wobei die Kombikraftwerkseinheit (10) einen separaten Wasser/Dampf-Kreislauf (23) mit einem Abhitzedampferzeuger (21), einer Dampfturbine (24), einem Kondensator (25), einem Speisewasserbehälter (26) und einer Speisewasserpumpe (27) umfasst und der Abhitzedampferzeuger (21) von den Abgasen der Gasturbinenanlage durchströmt wird, wobei aus einem kohlenstoffhaltigen Einsatzprodukt (62) in einer Vergasungseinheit (32) ein Gas gewonnen wird, aus welchem nach Kühlung und COS-Hydrolyse in einer Kühl- und Hydrolyseeinheit (35), einem Abtrennen von Säuregasen in einer MDEA-Wascheinheit (38) und einem Abtrennen von Metallcarbonyl in einer Metallcarbonyl-Entfernungseinheit (39) ein wasserstoffreiches Syngas (48) erzeugt wird, wobei einem Teil des Syngases (48) in einer Membran-Abtrenneinheit (41) der Wasserstoff entzogen wird, als Rohwasserstoff (46) einer PSA-Reinigungseinheit (40) zugeführt und dort zu reinen Wasserstoff (44) veredelt wird und ein bei der Membran-Abtrennung (41) und bei der PSA-Reinigung (40) anfallendes Restgas (45) in der Kombikraftwerkseinheit verarbeitet wird, wobei das wasserstoffreiche Syngas (48) oder der reine Wasserstoff (44) der Gasturbinenanlage als zweiter Brennstoff (15, 19) zugeführt wird, und wobei die Brennkammer bzw. Brennkammern (13, 17) mit Vormischbrennern (28) ausgestattet ist (sind), und in Strömungsrichtung zunächst der erste Brennstoff (14, 18) und weiter stromabwärts der zweite Brennstoff (15, 19) eingedüst werden, wobei die Vormischbrenner (28) eine Vormischeinrichtung (29) in Form eines Doppelkegels und ein nachfolgendes Mischrohr (30) aufweisen, und der erste Brennstoff (14, 18) in der Vormischeinrichtung (29) und der zweite Brennstoff (15, 19) im Mischrohr (30) eingedüst werden, und wobei in der Vormischeinrichtung (29) von außen zwischen den kegelförmigen Schalen Luft einströmt, in die über mehrere Düsenöffnungen senkrecht zum Kegelmantel der erste Brennstoff (14, 18) eingedüst wird.

2. Verfahren nach Anspruch 1, **dadurch gekennzeichnet, dass** die Gasturbinenanlage als Anlage mit sequentieller Verbrennung in wenigstens zwei aufeinander folgenden Brennkammern (13, 17) ausgebildet ist, denen jeweils eine Turbine (16, 20) nachgeschaltet ist, und dass in jeder der Brennkammern (13, 17) eine Mischung aus dem ersten und zweiten Brennstoff (14, 18 bzw. 15, 19) verbrannt wird.

3. Verfahren nach einem der Ansprüche 1 bis 2, **dadurch gekennzeichnet, dass** die heißen Abgase der Gasturbinenanlage zur Erzeugung von Dampf (49) verwendet werden.

4. Verfahren nach Anspruch 3, **dadurch gekennzeichnet, dass** der erzeugte Dampf zur Erzeugung des zweiten Brennstoffs (15, 19) verwendet wird.

## Claims

1. Method for operating a combined cycle power plant (10) with a gas turbine installation,
wherein the gas turbine installation comprises at least one compressor (12) for compressing combustion air, at least one combustion chamber (13, 17) for burning a supplied fuel (14, 15, 18, 19) using the compressed combustion air, and at least one turbine (16, 20) through which flow the hot gases from the at least one combustion chamber (13, 17);
wherein both a first carbon-based fuel (14, 18) in the form of natural gas, and a second fuel (15, 19) in the form of a hydrogen-rich fuel or pure hydrogen, are used as a fuel;
wherein the first and second fuels (14, 18 or 15, 19) are mixed together and burned together in the at least one combustion chamber (13, 17);
wherein the combined cycle power plant (10) comprises a separate water/steam circuit (23) with a waste heat steam generator (21), a steam turbine (24), a condenser (25), a feed water tank (26) and a feed water pump (27), and the exhaust gases from the gas turbine installation flow through the waste heat steam generator (21);
wherein a gas is obtained from a carbon-containing additive product (62) in a gasification unit (32), from which gas a hydrogen-rich syngas (48) is produced after cooling and COS hydrolysis in a cooling and hydrolysis unit (35), separation of acidic gases in an MDEA washing unit (38), and separation of metal carbonyl in a metal carbonyl removal unit (39);
wherein the hydrogen is extracted from part of the syngas (48) in a membrane separating unit (41), supplied as a crude hydrogen (46) to a PSA cleaning unit (40) and there refined into pure hydrogen (44), and a residual gas (45) occurring from membrane separation (41) and PSA cleaning (40) is processed in the combined cycle power plant;
wherein the hydrogen-rich syngas (48) or the pure hydrogen (44) is supplied to the gas turbine installation as a second fuel (15, 19); and
wherein the combustion chamber or chambers (13, 17) is/are equipped with premix burners (28) and in the flow direction, firstly the first fuel (14, 18) and further downstream the second fuel (15, 19) are injected;
wherein the premix burner (28) comprises a premix device (29) in the form of a double cone and a subsequent mixing pipe (30), and the first fuel (14, 18) is injected in the premix device (29) and the second fuel (15, 19) in the mixing pipe (30); and wherein air from the outside flows into the premix device (29) between the conical shells, into which the first fuel (14, 18) is injected perpendicularly to the cone casing via several nozzle openings.

2. Method according to claim 1, **characterised in that** the gas turbine installation is configured as an installation with sequential combustion in at least two successive combustion chambers (13, 17), wherein a turbine (16, 20) is arranged downstream of each of said combustion chambers, and a mixture of the first and second fuels (14, 18 or 15, 19) is burned in each of the combustion chambers (13, 17).

3. Method according to any of claims 1 to 2, **characterised in that** the hot exhaust gases from the gas turbine installation are used to produce steam (49).

4. Method according to claim 3, **characterised in that** the steam produced is used to produce a second fuel (15, 19).

## Revendications

1. Procédé pour l'exploitation d'une unité (10) de centrale à cycle combiné, comportant une installation de turbine à gaz, l'installation de turbine à gaz présentant au moins un compresseur (12) pour comprimer de l'air de combustion, au moins une chambre de combustion (13, 17) pour la combustion, par utilisation de l'air de combustion comprimé, d'un combustible amené (14, 15, 18, 19), ainsi qu'une turbine (16, 20), qui est traversée par les gaz chauds provenant de l'au moins une chambre de combustion (13, 17), où l'on utilise en tant que combustible tant un premier combustible (14, 18) à base de carbone sous forme de gaz naturel, qu'un deuxième combustible (15, 19) sous forme d'un combustible riche en hydrogène, ou de l'hydrogène pur, le premier et le deuxième combustible (respectivement 14, 18 et 15, 19) étant mélangés l'un à l'autre et subissant une combustion commune dans l'au moins une chambre de combustion (13, 17) ; l'unité (10) de centrale à cycle combiné comprenant un circuit eau/vapeur distinct (23) comportant un générateur de vapeur (21) à récupération de chaleur, une turbine à vapeur (24), un condenseur (25), une bâche alimentaire (26) et une pompe alimentaire (27), et le générateur de vapeur (21) à récupération de chaleur étant traversé par les gaz d'échappement de l'installation de turbine à gaz ; un gaz étant obtenu à partir d'une matière première (62) contenant du carbone dans une unité de gazéification (32), un gaz de synthèse (48) riche en hydrogène étant produit à partir de ce gaz, après refroidissement et hydrolyse de COS dans une unité de refroidissement et d'hydrolyse (35), séparation de gaz acides dans une unité de lavage à la MDEA (38), et séparation du métal-carbonyle dans une unité d'élimination du métal-carbonyle (39) ; l'hydrogène d'une partie du gaz de synthèse (48) étant prélevé dans une unité (41) de séparation membranaire, envoyé sous forme d'hydrogène brut (46) à une installation de purification PSA (40) et y étant purifiée pour donner de l'hydrogène pur (44), et un gaz résiduel (45), obtenu lors de la séparation membranaire (41) et lors de la purification PSA (40), étant transformé dans l'unité de centrale à cycle combiné ; le gaz de synthèse riche en hydrogène (48) ou l'hydrogène pur (44) étant envoyé à l'installation de turbine à gaz en tant que deuxième combustible (15, 19) ; et la ou les chambre(s) de combustion (13, 17) étant équipée(s) de brûleurs de prémélange (28), et, dans le sens de l'écoulement, d'abord le premier combustible (14, 18) puis, en aval, le deuxième combustible (15, 19) étant injectés ; les brûleurs de prémélange (28) présentant un dispositif de prémélange (29) sous forme d'un double cône suivi d'un tube mélangeur (30), et le premier combustible (14, 18) étant injecté dans le dispositif de prémélange (29) et le deuxième combustible (15, 19) étant injecté dans le tube mélangeur (30) ; et, dans le dispositif de prémélange (29), de l'air venant de l'extérieur étant introduit entre les enveloppes coniques, air dans lequel, par plusieurs orifices de buse, on injecte, perpendiculairement à l'enveloppe des cônes, le premier combustible (14, 18).

2. Procédé selon la revendication 1, **caractérisé en ce que** l'installation de turbine à gaz est conçue comme une installation à combustion séquentielle dans au moins deux chambres de combustion (13, 17) disposées l'une à la suite l'autre, une turbine (16, 20) étant montée en aval de chacune d'elles, et **en ce qu'**un mélange du premier et du deuxième combustible (respectivement 14, 18 et 15, 19) est brûlé dans chacune des chambres de combustion (13, 17).

3. Procédé selon l'une des revendications 1 à 2, **caractérisé en ce que** les gaz d'échappements chauds de l'installation de turbine à gaz sont utilisés pour la production de vapeur (49).

4. Procédé selon la revendication 3, **caractérisé en ce que** la vapeur produite est utilisée pour la production du deuxième combustible (15, 19).
